# EUROPEAN PATENT APPLICATION

(11) **EP 1 603 100 A1**
(43) Date of publication of application: **07.12.2005**
(21) Application number: 05011796.9
(22) Date of filing: 01.06.2005
(51) Int. Cl.: G09B 23/12

(54) **Scientific phenomena evaluation device and manufacturing method of the same**

(30) Priority: 01.06.2004 JP 2004163234
(71) Applicant: FUJI PHOTO FILM CO., LTD., Kanagawa (JP)
(72) Inventor: Ueyama, Tomohide, Minami-Ashigara-shi Kanagawa (JP); Ichikawa, Yasunori, Minami-Ashigara-shi Kanagawa (JP); Kurahashi, Tetsuo, Minami-Ashigara-shi Kanagawa (JP)
(74) Representative: HOFFMANN EITLE

(57) **Abstract**

There is provided a scientific phenomena evaluation device including: a base plate (12) in which long grooves (14,16,20) having sectional areas of 1 mm² or less are formed in a surface; and a cover plate (22) that is placed on the surface of the base plate (12) and covers said long grooves (14,16,20) to form minute channels (14A,16A) in the base plate (12), wherein the base plate (12) and the cover plate (22) are bonded together without an adhesive, and scientific phenomena in the channels (14A,16A) are visually perceivable. The evaluation device is formed by a manufacturing method including: a drying step of heating resin materials at a temperature lower than a glass transition point Tg at the degree of vacuum of 0.2 atmospheric pressure or less; a stacking step of stacking the base plate (12) and the cover plate (22) together; and a bonding step of bonding the base plate (12) and the cover plate (22) together while heating the base plate (12) and the cover plate (22) at a temperature equal to or higher than the glass transition point Tg.

## Description

### BACKGROUND OF THE INVENTION

### 1. Field of the Invention

The present invention relates to a scientific phenomena evaluation device and a manufacturing method thereof, and more particularly to a scientific phenomena evaluation device and a manufacturing method thereof that are inexpensive, environmentally friendly, and appropriate for enjoying high technology with ease.

### 2. Related Art

Various types of scientific phenomena evaluation devices and scientific experiment education materials have been proposed (see Japanese Patent Application Laid Open No. 2000-242162).

For example, Japanese Patent Application Laid Open No. 2000-242162 discloses a science education material that allows observation of natural phenomena by temperature changes of water by cooling or freezing water vapor in the air or water or water vapor in a container, is small in size and simple in structure, and is capable of faithfully reproducing various kinds of natural phenomena by temperature changes of water.

As scientific experimental devices for education, experimental kits such as "Science and Learning: Experimental Kit Series" and "Scientific Global Environment Analysis Kit for Adults" are available from Gakken Co., Ltd. Such experimental kits, which provide dream to children or enjoyment of experiments to users, are available at relatively low prices of about a few hundred yen to three thousand yen and well received.

Such a conventional scientific phenomena evaluation device as described in Japanese Patent Application Laid Open No. 2000-242162, however, has a relatively complex configuration and is not available at low price, and is thus inappropriate for all students in the class to buy.

On the other hand, experimental kits having relatively simple configurations are often available at relatively low prices, and appropriate for all students in the class to buy. However, such kits have poor finishing accuracy and use a large amount of chemicals, and if all students in the class use the kits, it is environmentally unfriendly in terms of wastewater treatment or the like and undesirable.

Also, such conventional experimental kits provide experience of classical scientific experiments, and an extremely limited number of kits provide enjoyment of high technology with ease.

In view of such circumstances, the inventors consider a scientific phenomena evaluation device including a base plate, long grooves having minute sectional areas being formed in the surface, and a cover plate that is bonded to the surface of the base plate and covers the long grooves to form minute channels in the base plate, scientific phenomena in the channels being visually perceivable, desirable as a scientific phenomena evaluation device that are inexpensive, environmentally friendly, and appropriate for enjoying high technology with ease.

### SUMMARY OF THE INVENTION

When a base plate and a cover plate are bonded together with an adhesive, however, the adhesive flows into long grooves formed by micromachining to damage sectional shapes of the long grooves, thereby preventing high quality from being maintained.

On the other hand, a configuration can be considered in which a base plate and a cover plate are vertically bonded using a frame or the like, but the number of components is increased for the frame or the like, which is not cost-effective. Also, poor flatness of bonded surfaces of the base plate and the cover plate may cause a defect such as leak.

The invention is achieved in view of such circumstances, and has an object to provide a scientific phenomena evaluation device and a manufacturing method thereof that are inexpensive, environmentally friendly, and appropriate for enjoying high technology with ease.

In order to achieve the above described object, the invention provides a scientific phenomena evaluation device including: a base plate, long grooves having sectional areas of 1 mm² or less being formed in the surface; and a cover plate that is placed on the surface of the base plate and covers the long grooves to form minute channels in the base plate, wherein the base plate and the cover plate are bonded together without an adhesive, and scientific phenomena in the channels are visually perceivable.

According to the invention, the base plate and the cover plate are bonded together without the adhesive, thereby preventing damage to sectional shapes of the long grooves and allowing high quality to be maintained. This provides a scientific phenomena evaluation device that is inexpensive, environmentally friendly, and appropriate for enjoying high technology with ease.

In the evaluation device, the minute channels having the sectional areas of 1 mm² or less are formed, and thus the evaluation device provides adequate accuracy for experiencing high technology, for example, various kinds of phenomena such as a diffusion phenomenon of a liquid, a heat transfer phenomenon of a liquid, a mixing phenomenon of a liquid, or a chemical reaction of a liquid (for example, an acid/alkali reaction or a hydrolysis reaction) that occur in the minute channels, and uses a small amount of chemicals to be environmentally friendly. Such a scientific phenomena evaluation device is appropriate as a scientific experiment education material.

The sectional area of each minute channel is preferably 1 mm² or less, more preferably 0.0025 to 0.64 mm², and most preferably 0.01 to 0.25 mm².

In the invention, the base plate and/or the cover plate is preferably made of a transparent resin material. The transparent (or translucent) base plate and/or cover plate allows scientific phenomena in the channels to be visually perceived. The base plate and/or the cover plate made of the resin material can provide an inexpensive evaluation device.

The invention also provides a manufacturing method of a scientific phenomena evaluation device including: a drying step of heating resin materials at a temperature lower than a glass transition point Tg of the resin materials and drying the resin materials; a stacking step of stacking a base plate and a cover plate together; and a bonding step of bonding the stacked base plate and cover plate together while heating the base plate and cover plate at a temperature equal to or higher than the glass transition point Tg of the resin materials.

According to the invention, the resin materials are heated, then stacked, and bonded while being heated, thereby providing good bonding between the base plate and the cover plate. Specifically, in the drying step, moisture or low molecules that evaporate at high temperature in the resin materials can be sufficiently removed, thereby preventing a defect of producing bubbles on bonded surfaces. In the bonding step, the resin materials are heated at the temperature equal to or higher than the glass transition point Tg, thereby providing good bonding. In the drying step, the resin materials are maintained at the temperature lower than the glass transition point Tg, thereby preventing damage to sectional shapes of the long grooves caused by heat deformation.

Known techniques of bonding resin materials (for example, Japanese Patent Application Laid Open No. 9-300471, Japanese Patent Application Laid Open No. 2003-165132) are a technique of heating and welding a pipe of thermoplastic resin or a welding rod of thermoplastic resin for bonding, or a technique of forming different kinds of members to be integrated with each other, which are different from the invention. The main objects of such conventional techniques are to improve workability, increase bonding strength, and increase bonding accuracy, or the like, which are also different from the object of the invention.

According to the invention, it is preferable that the resin materials are dried so as to have a moisture content of 0.2% or less in the drying step. The resin materials in such a state provide excellent bonding.

The moisture content means a ratio between the amount of moisture in the resin material and a total weight of the resin material. The moisture content is preferably 0.1 % or less, and more preferably 0.05% or less.

Devices that dry the resin materials so as to have the moisture content of 0.2% or less include a vacuum drying oven, a hot-blast stove, and a dehumidification dryer, or the like.

For the vacuum drying oven, the degree of vacuum in the oven is preferably 0.2 atmospheric pressure or less, more preferably 0.1 atmospheric pressure or less, and most preferably 0.05 atmospheric pressure or less.

In the invention, it is preferable that a cleaning step of cleaning the base plate and/or the cover plate is provided before the drying step. Such a cleaning step provides a good surface state of the base plate and/or the cover plate, and provides better bonding between the base plate and the cover plate.

In the invention, it is preferable that the stacked base plate and cover plate are pressurized to 5 kPa or more in the bonding step. The bonding state of the stacked article in the bonding step significantly depends on heating temperature and holding time, but at least such a pressurized state can provide better bonding between the base plate and the cover plate.

In the invention, the stacking step is preferably performed at the cleanliness of class 100 or less. Stacking in such good atmosphere can prevent deposition of foreign matters and provide better bonding between the base plate and the cover plate.

The scientific phenomena are various kinds of chemical or physical phenomena that occur in the minute channels and include a diffusion phenomenon of a liquid, a heat transfer phenomenon of a liquid, a mixing phenomenon of a liquid, or a chemical reaction of a liquid (for example, an acid/alkali reaction or a hydrolysis reaction).

As described above, according to the invention, the base plate and the cover plate are bonded together without an adhesive, thereby preventing damage to the sectional shapes of the long grooves and allowing high quality to be maintained. This provides a scientific phenomena evaluation device that is inexpensive, environmentally friendly, and appropriate for enjoying high technology with ease.

### BRIEF DESCRIPTION OF THE DRAWINGS

Fig. 1 is a plan view of a configuration of a scientific phenomena evaluation device according to the invention;
Fig. 2 is a partial enlarged sectional view of Fig. 1;
Fig. 3 is a partial enlarged sectional view of Fig. 1;
Fig. 4A is a sectional view of a procedure of an experimental method;
Fig. 4B is a sectional view of a procedure of an experimental method;
Fig. 4C is a sectional view of a procedure of an experimental method;
Fig. 4D is a sectional view of a procedure of an experimental method;
Fig. 5A is a sectional view of the procedure of the experimental method; and
Fig. 5B is a sectional view of the procedure of the experimental method.

### DETAILED DESCRIPTION OF THE PREFERRED EMBODIMENTS

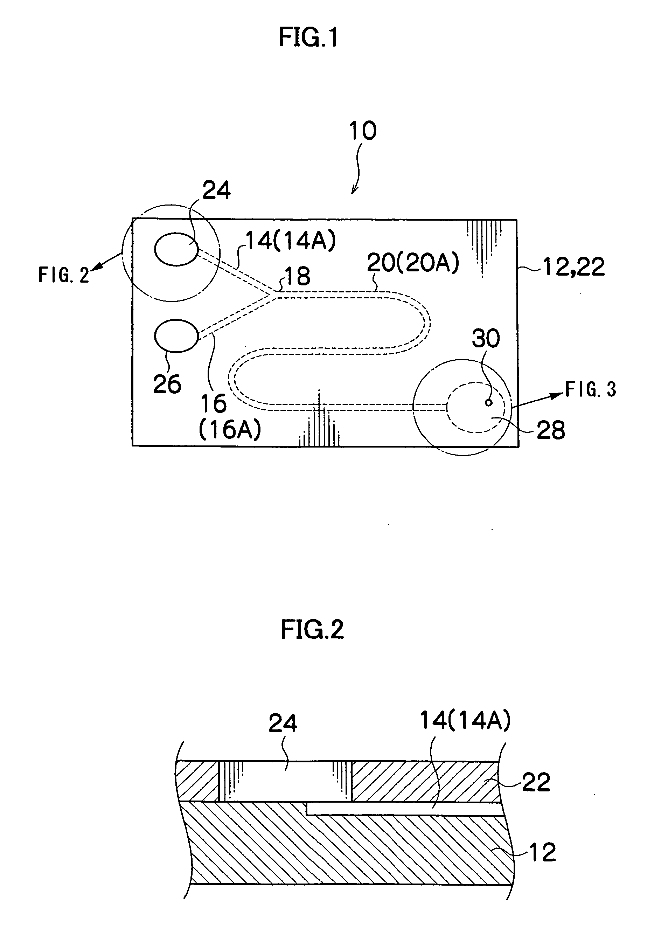

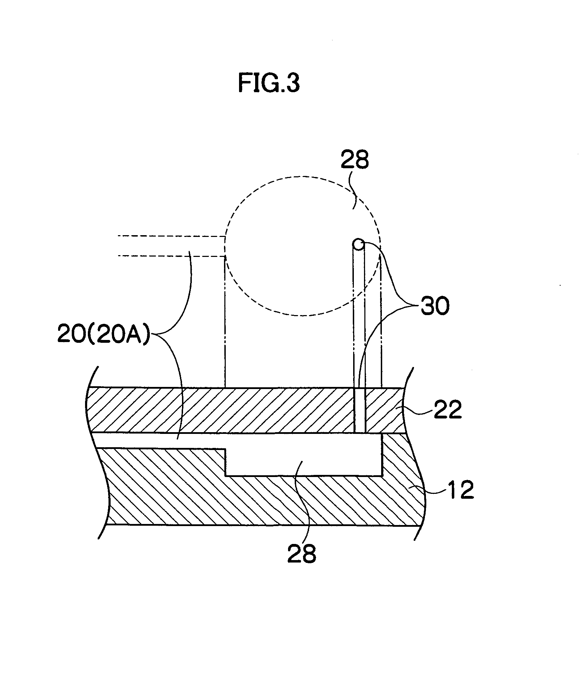

Now, a preferred embodiment of a scientific phenomena evaluation device and a manufacturing method thereof according to the invention will be described in detail with reference to the accompanying drawings. Fig. 1 is a plan view of a configuration of a scientific experiment education material 10 that is a scientific phenomena evaluation device according to the invention. Figs. 2 and 3 are partial enlarged sectional views of Fig. 1, Fig. 2 shows a first reservoir 24 (within a dotted line at an upper left portion in Fig. 1), and Fig. 3 shows a third reservoir 28 (within a dotted line at a lower right portion in Fig. 1).

Specifically, the scientific experiment education material 10 includes a base plate 12 in which long grooves 14, 16 and 20 having sectional areas of 1 mm² or less are formed in a surface, and a transparent cover plate 22 that is bonded to the surface of the base plate 12 and covers the long grooves to form minute channels 14A, 16A and 20A in the base plate 12.

The minute channels formed by the long grooves 14, 16 and 20 include a first channel 14A and a second channel 16A that have substantially the same length and merge at a merging point 18, and a third channel 20A that further merges with the first channel 14A and the second channel 16A at the merging point 18.

The other end of the first channel 14A communicates with the first reservoir 24 that is a cylindrical hollow portion formed in the cover plate 22, the other end of the second channel 16A communicates with a second reservoir 26 that is a cylindrical hollow portion formed in the cover plate 22, and the other end of the third channel 20A communicates with the third reservoir 28 that is a cylindrical hollow portion formed in the base plate 12.

Further, a through hole 30 that allows communication between the third reservoir 28 and outside air is formed in a portion of the cover plate 22 corresponding to the third reservoir 28.

The capacities of the first reservoir 24, the second reservoir 26, and the third reservoir 28 are preferably 5 to 5000 mm³. Such capacities facilitate control of phenomena that occur in micro channels.

Sizes of planes of the base plate 12 and the cover plate 22 are not limited, but the planes may be of a portable size of, for example, 80 × 50 mm in view of the nature of the scientific experiment education material 10 used at school. Thicknesses of the base plate 12 and the cover plate 22 are not limited but may be, for example, about 5 mm in view of strengthen, cost efficiency, or the like.

A material of the base plate 12 is not limited, but resin materials, more specifically, polydimethyl sulfoxide (PDMS), polymethylmethacrylate (PMMA), polyvinyl chloride (PVC), ultraviolet curable resin, and polycarbonate (PC), or the like may be preferably used in terms of facilitating a below described manufacturing method.

The sectional area of each of the long grooves 14, 16 and 20 formed in the surface of the base plate 12 is preferably 1 mm² or less, more preferably 0.0025 to 0.64 mm², and most preferably 0.01 to 0.25 mm² as described above. The sectional shape of each of the long grooves 14, 16 and 20 is not limited, but may be selected from various kinds of shapes such as a rectangular shape (a square or a rectangle), a trapezoidal shape, a V shape, or a semicircular shape.

A material of the cover plate 22 is not limited, but the cover plate 22 is preferably transparent in order to allow scientific phenomena in the channels to be visually perceived. As such a material, various types of resin plates, more specifically, polydimethyl sulfoxide (PDMS), polymethylmethacrylate (PMMA), polyvinyl chloride (PVC), and ultraviolet curable resin, and polycarbonate (PC), or the like, various types of resin films, more specifically, polyethylene terephthalate (PET), polyethylene naphthalate (PEN), and triacetyl cellulose (TAC), or the like, and various types of glass (soda lime glass, borosilicate glass, or the like) may be used.

The cover plate 22 is generally a flat plate having flat front and back surfaces, but may have a configuration such that a front surface at portions corresponding to the minute channels 14A, 16A and 20A may be formed into semi-cylindrical convex lens shapes to allow observation in an enlarged state.

Such a configuration that the cover plate 22 is opaque and the base plate 12 is transparent may be used.

It is also preferable that the base plate 12 and the cover plate 22 are made of a cast material having a large amount of deformation by heating because the amount of deformation of the material has significant influence on bonding between the base plate 12 and the cover plate 22 in a below described bonding method of the base plate 12 and the cover plate 22. However, the base plate 12 and the cover plate 22 need to be stacked together in the same cast direction because an expansion ratio differs depending on cast directions.

Ensuring sufficient flatness of a front surface of the base plate 12 (a surface in which the long grooves are formed) and a back surface of the cover plate 22 (a surface bonded to the base plate 12) is preferable in terms of forming the channels 14A, 16A and 20A and preventing leak.

Next, a forming method of the base plate 12 will be described. First, an inverted mold is prepared having a surface in which inverted shapes of the long grooves 14, 16 and 20 in the base plate 12 are formed. In the surface of the inverted mold, an inverted shape of the third reservoir 28 needs to be further formed. As a manufacturing method of the inverted mold, various types of known machining methods may be used such as machining by a machining center or the like, electrical discharge machining, ultrasonic machining, or photoetching.

Then, a release agent is applied to the surface of the inverted mold. An appropriate release agent may be used depending on a type or a machining condition (a temperature or the like) of a resin material for the base plate 12.

Next, the resin material is applied to the surface of the inverted mold and cured. When the resin material is an ultraviolet curable resin, the applied resin material is irradiated with ultraviolet light and cured. When the resin material is a thermoplastic resin such as polyvinyl chloride (PVC), the resin material is brought into contact with the surface of the inverted mold and heat transfer molded by a hot pressing machine.

Then, the cured resin material is released from the inverted mold.

Such a method allows the long grooves to be formed with high accuracy at low price, thereby providing an inexpensive evaluation device.

Next, a bonding method of the base plate 12 and the cover plate 22 that is a characteristic feature of the invention will be described.

First, the base plate 12 and the cover plate 22 are cleaned. Various types of known cleaning methods may be used such as automatic cleaning by a cleaner and hand cleaning. For example, for a base plate 12 and a cover plate 22 having a size of a plane of 80 × 50 mm and a thickness of 5 mm, hand scrubbing using neutral detergent and a sponge is preferably used.

It is preferable to perform drainage by an air knife or a drying air blow after the cleaning for preventing drying traces in the next drying step.

Then, the drying step is performed. In this step, it is preferable that the base plate 12 and the cover plate 22 are heated at a temperature lower than a glass transition point Tg at the degree of vacuum of 0.5 atmospheric pressure or less. Various types of known devices that achieve such a state may be used, and for example, a vacuum over is preferably used.

It is preferable that the base plate 12 and the cover plate 22 are held in an upright state using jigs or the like in the vacuum oven in terms of efficient use of an internal volume of the vacuum oven and the drying state of the base plate 12 and the cover plate 22.

An atmospheric temperature and a processing time in the vacuum oven differ depending on materials of the base plate 12 and the cover plate 22, and for example, for a base plate 12 and a cover plate 22 made of polymethylmethacrylate, the atmospheric temperature can be 90°C to 100°C and the processing time can be 10 hours.

A stacking step is performed following the drying step. In the stacking step, the base plate 12 and the cover plate 22 are stacked together. This operation is preferably performed at the cleanliness of class 100 or less in a clean bench or a clean room in terms of quality of the scientific experiment education material 10. After the stacking, the stacked base plate 12 and cover plate 22 are preferably temporarily attached using a heat-resistant adhesive tape that is adhered to part of end surfaces of the base plate 12 and the cover plate 22 and connects the base plate 12 and the cover plate 22. The temporary attaching is preferably performed at two or four sides in the end surface.

A bonding step is performed following the stacking step. As a device (equipment) used in the bonding step, various types of devices (equipment), for example, a hot pressing machine may be used as long as the stacked base plate 12 and cover plate 22 can be pressurized and bonded while being heated at a temperature equal to or higher than the glass transition point Tg.

As simple equipment, a configuration using an oven and a weight (a dead weight) is used for description.

In the bonding step, first, platens are placed on upper and lower surfaces of the stacked base plate 12 and cover plate 22 to sandwich the stacked article between the platens. As the platens, float glasses are preferably used having substantially the same plane size as the base plate 12 and the cover plate 22 and a thickness of 5 mm.

The platens are used because a load is uniformly applied to the upper and lower surfaces of the stacked base plate 12 and cover plate 22. Specifically, a portion on which the stacked article is placed in the oven is generally a metal mesh shelf, which prevents the load from being uniformly applied. The weight (the dead weight) is generally made of metal, and machining the lower surface of the weight with good flatness increases costs.

On the other hand, the float glass is relatively inexpensive. Particularly, a float glass having a thickness of about 5 mm has good flatness and sufficient rigidity, receives a load from the upper and lower surfaces, and uniformly applies the load to the stacked article.

The stacked article sandwiched by the platens is placed on the shelf (the portion on which the stacked article is placed) in the oven, and the weight (the dead weight) is placed on the stacked article.

When the weight is made of stainless steel, and the plane size of the weight is substantially the same as the base plate 12 and the cover plate 22, the thickness of the weight may be about 130 mm for pressurizing the stacked article at 10 kPa.

In the bonding step, a condition for bonding the base plate 12 and the cover plate 22 together differs depending on materials of the base plate 12 and the cover plate 22, but for the base plate 12 and the cover plate 22 made of polymethylmethacrylate, a pressurizing force is 10 to 15 kPa when the atmospheric temperature is 130°C to 140°C, and the pressurizing force is 15 to 20 kPa when the atmospheric temperature is 120°C to 130°C.

The processing time is also a significant element, and an optimum condition is preferably considered in view of the atmospheric temperature, the pressurizing force, and cost efficiency (throughput, yield or the like).

The important point in the bonding step is to control so as not to damage sectional shapes of the long grooves resulting from setting too high an atmospheric temperature or too long a processing time, and control so as not to prevent bonding between the base plate 12 and the cover plate 22 (cause leak or cause bubbles to remain on the bonded surfaces) resulting from setting too low an atmospheric temperature or too short a processing time.

In the bonding step, for the configuration using the oven and the weight, a temperature increase speed in the oven is preferably 0.5°C/min to 10°C/min, and more preferably 1°C/min to 5°C/min. A temperature decrease speed is preferably 0.1°C/min to 1°C/min, and more preferably 0.3°C/min to 0.5°C/min in terms of preventing poor bonding by deformation.

Next, a using method of the scientific experiment education material 10 according to the invention will be described. For the scientific experiment education material 10, the following members 1) to 7) need to be provided as a set.
1) The stacked and bonded base plate 12 and cover plate 22
2) A sample liquid dropper (used for supplying necessary sample liquids (reagents) into the first reservoir 24 and the second reservoir 26 depending on test purposes. A dropper exclusive to each chemical may be prepared, or one dropper may be cleaned and reused.)
3) A sealing tape for a sample liquid orifice (which serves as a lid of the first reservoir 24 and the second reservoir 26 that are supply halls of the sample liquids, and is for closing the first reservoir 24 and the second reservoir 26 after the sample liquids are supplied into the first reservoir 24 and the second reservoir 26 with a pipette. The tape may be also used as a lid for the third reservoir 28.)
4) A needle (for boring a hole in the tape as required in order to feed air of varied amounts of the sample liquids into the first reservoir 24 and the second reservoir 26 when the liquids are supplied and received in the case where the sample liquids are supplied or collected.)
5) A feeding device
   (The feeding method uses a phenomenon in which applying heat to the first reservoir 24 and the second reservoir 26 with the first reservoir 24 and the second reservoir 26 being closed by the tape (placing a fingertip on the tape and heating the tape by body heat, or the like) causes the volume expansion of the liquid and/or the gas in the first reservoir 24 and the second reservoir 26.)
   A method for pressuring the insides of the first reservoir 24 and the second reservoir 26 using the principle of a pump to feed the liquid out of the first reservoir 24 and the second reservoir 26, or the like is possible.
   In this case, the needle in the item 4) is used to bore a small hole in the tape when the tape is adhered to the third reservoir 28.
   In the case where the sample liquids in the first reservoir 24 and the second reservoir 26 are fed into the channels 14A, 16A and 20A by reducing pressure on the side of the third reservoir 28 using a pump or the like, or placing an ice block on the third reservoir 28 and compressing gas in the third reservoir 28 to reduce pressure, the needle in the item 4) is used to bore a small hole in the tape lid of the first reservoir 24 and the second reservoir 26 to allow liquid feeding.
6) Test sample liquids (reagents)
   (The chemicals suitable for a purpose are placed in a reagent container and supplied as test reagents for the scientific experiment. For example, the sample liquids include a colored liquid such as a dye or a pigment, and a transparent liquid such as water).
7) An experiment guide
   (A guide of events that can be learned by this set describing a purpose of the experiment conducted using the set, explanation on the phenomena, applications, or the like is attached if required.)

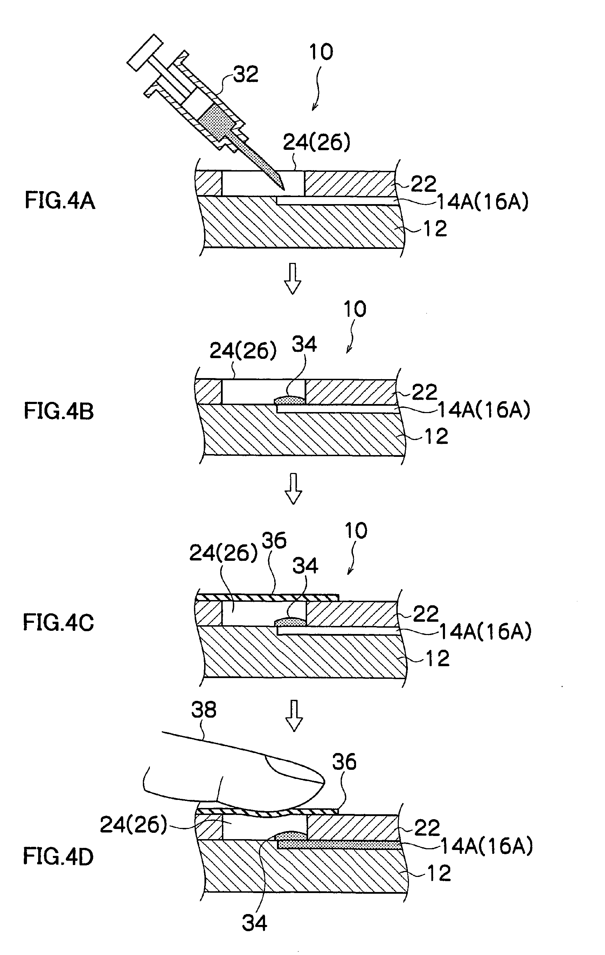

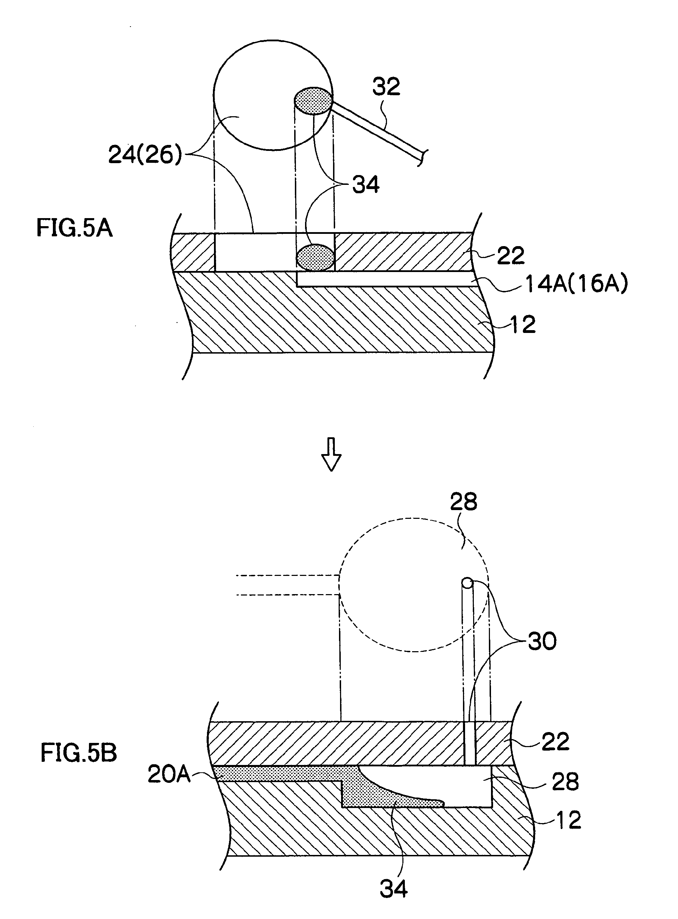

Details of the experiment using the set will be now described. Figs. 4 and 5 are sectional views of a procedure of the experimental method. Fig. 4 shows a time-series procedure in the first reservoir 24 and the second reservoir 26. On the other hand, Fig. 5A shows an experiment start state where the sample liquid is supplied to the first reservoir 24 and the second reservoir 26, and Fig. 5B shows an experiment finish state where the sample liquid reaches the third reservoir 28.

As shown in Fig. 4A, a predetermined amount of sample liquid 34 is supplied into the first reservoir 24 (or the second reservoir 26) by a sample liquid dropper 32. The sample liquid 34 is supplied so as to fill in a portion communicating with the channel 14A (or 16A) in the first reservoir 24 (or the second reservoir 26) as shown in Figs. 4B and 5A.

Then, as shown in Fig. 4C, the first reservoir 24 (or the second reservoir 26) is closed by a tape 36 for sealing a sample liquid orifice. The tape 36 is coated with an adhesive material on one surface (a lower surface in the drawing) and seals the first reservoir 24 (or the second reservoir 26) from the outside air.

Then, a fingertip 38 is placed on the tape 36 as shown in Fig. 4D. This causes the feeding device to be formed in the first reservoir 24 (or the second reservoir 26). As described above, the feeding device operates so that the heat of the fingertip 38 causes the volume expansion of the gas in the first reservoir 24 (or the second reservoir 26) to feed the sample liquid 34 into the channel 14A (or 16A).

In a configuration similar to the configuration in Fig. 4D, the feeding device may operate so that the tape 36 is pushed by the fingertip 38 and bent downward to reduce the capacity of the first reservoir 24 (or the second reservoir 26), thereby feeding the sample liquid 34 into the channel 14A (or 16A).

By the above described feeding device, the sample liquid 34 reaches the third reservoir 28 to finish the experiment as shown in Fig. 5B. At this time, sample liquids 34 are simultaneously fed from the first reservoir 24 and the second reservoir 26 in Fig. 1 to the channel 14A and the channel 16A, respectively, by the feeding device, thereby allowing observation of merging of the sample liquids 34 at the merging point 18.

Particularly, the sample liquid 34 supplied to the first reservoir 24 and the sample liquid 34 supplied to the second reservoir 26 are differently colored to facilitate observation of the merging of the sample liquids 34 at the merging point 18. For example, a colored sample liquid 34 is supplied to the first reservoir 24, and a transparent and colorless sample liquid 34 is supplied to the second reservoir 26.

An observer can observe the channel 20A downstream of the merging point 18 of the sample liquids 34 flowing in this manner and thus confirm a phenomenon in which colored molecules such as a dye or a pigment are diffused toward the transparent liquid from the side of the colored liquid flowing in the micro channel.

Sample liquids 34 of different colors and also of different viscosities are supplied to the first reservoir 24 and the second reservoir 26 to allow observation of the sample liquids 34 merging at the merging point 18 in a different manner.

In order to facilitate observation of such phenomena, a hand lens or a magnifying glass may be used. The cover plate 22 at the portions corresponding to the channel 20A may have a magnifying glass function (a lens function) as descried above.

The scientific experiment education material 10 described above includes important parts that are simplified as much as possible and inexpensive, and allows experiments with high accuracy in order for children to conduct scientific experiments in microworld with enjoyment and dream.

Particularly, in qualitative observation of a molecular diffusion phenomenon that forms the basis of a chemical reaction, it is important that a plurality of liquids flow in the channels under the same condition in order to increase experimental accuracy, and such a requirement is sufficiently met. Specifically, a relatively accurate experiment can be conducted with a simple and inexpensive device. The experiment is conducted in the microworld, and thus requires an extremely small amount of chemicals such as a dye or a pigment to be environmentally friendly.

The scientific phenomena evaluation device and the manufacturing method thereof have been described above, but the invention is not limited to the embodiment, various aspects may be adopted.

For example, in the embodiment of the manufacturing method, the bonding step is performed under atmospheric pressure, but may be performed in a vacuum (or under a reduced pressure). In the case where the bonding step is performed under a reduced pressure, and then the stacked article is taken out under atmospheric pressure, a gap created between the base plate 12 and the cover plate 22 in the bonding step is eliminated by the stacked article receiving the atmospheric pressure, thereby preventing bubble defects.

In this sense, it is more preferable that in the bonding step, a configuration is used where no load is applied to the stacked article initially in the bonding state (for example, the weight is suspended by another device) in order to facilitate deaeration between the base plate 12 and the cover plate 22, and after a predetermined time has elapsed and when the degree of vacuum becomes able to be maintained, a configuration is used where the load is applied to the stacked article (for example, the suspension of the weight is released).

In the embodiment, the configuration using the oven and the weight is used in the bonding step, but a configuration using a multistage hot pressing machine may be used for an increased production quantity. The multistage hot pressing machine can perform processings in large quantity in one batch, can use a boiler for heating, and is thus desirable in industrial production.

For the configuration of the stacked and bonded base plate 12 and cover plate 22, in the embodiment, the example of the experiment education material has been described that allows observation of the phenomenon in which the two kinds of sample liquids 34 merge at the merging point 18 and the colored molecules such as the dye or the pigment are diffused toward the transparent liquid, but various types of other experiment education materials may be applied.

In the embodiment, the first reservoir 24 and the second reservoir 26 are formed in the cover plate 22, and the third reservoir 28 is formed in the base plate 12, but other aspects, for example, an aspect of forming all the reservoirs in the cover plate 22 may be adopted.

In the embodiment, three sets of channels and reservoirs are provided, but four or more sets of channels and reservoirs may be provided.

Further, the sample liquid dropper 32 is used to supply the sample liquid (reagent) to the reservoir (24, 26, or the like), but an injector or a micro syringe having the same function may replace the sample liquid dropper 32. Generally, an inexpensive dropper is preferably used for a scientific experiment education material. Depending on test purposes, however, the injector or the micro syringe having the same function is sometimes preferably used as described above.

## Claims

1. A scientific phenomena evaluation device which comprises:
a base plate (12) in which long grooves (14,16,20) having sectional areas of 1 mm² or less being formed in the surface; and
a cover plate (22) that is placed on the surface of said base plate (12) and covers said long grooves to form minute channels (14A,16A) in said base plate (12),
**characterized in that** said base plate (12), and said cover plate (22) are bonded together without an adhesive, and
scientific phenomena in said channels (14A,16A) are visually perceivable.

2. The scientific phenomena evaluation device according to claim 1, **characterized in that** said base plate (12) and/or said cover plate (22) is made of a transparent resin material.

3. A manufacturing method of a scientific phenomena evaluation device according to claim 2, **characterized by** comprising:
a drying step of heating resin materials at a temperature lower than a glass transition point Tg of said resin materials and drying the resin materials;
a stacking step of stacking a base plate (12) and a cover plate (22) together; and
a bonding step of bonding said stacked base plate (12) and cover plate (22) together while heating said base plate (12) and cover plate (22) at a temperature equal to or higher than the glass transition point Tg of said resin materials.

4. The manufacturing method of a scientific phenomena evaluation device according to claim 3, wherein said resin materials are dried so as to have a moisture content of 0.2% or less in said drying step.

5. The manufacturing method of a scientific phenomena evaluation device according to claim 3 or 4, wherein a cleaning step of cleaning said base plate (12) and/or said cover plate (22) is provided before said drying step.

6. The manufacturing method of a scientific phenomena evaluation device according to any one of claims 3 to 5, wherein said stacked base plate (12) and cover plate (22) are pressurized to 5 kPa or more in said bonding step.

7. The manufacturing method of a scientific phenomena evaluation device according to any one of claims 3 to 6, wherein said stacking step is performed at the cleanliness of class 100 or less.
